# FASCICULE DE BREVET EUROPEEN

(11) **EP 0 498 697 B1**
(45) Date de publication et mention de la délivrance du brevet: **28.08.1996**
(21) Numéro de dépôt: 92400232.2
(22) Date de dépôt: 29.01.1992
(51) Int. Cl.: H04L 12/40, H04L 25/493

(54) **Dispositif de gestion de l'accès de stations de traitement d'informations à un réseau de transmission d'informations par voie optique entre ces stations**
Vorrichtung zur Verwaltung des Zugriffes von Informationsverarbeitungsstationen für ein optisch Informationsübertragungsnetzwerk zwischen diesen Stationen
Device for controlling the access of information processing stations to an information transmission network using optical transmission between these stations

(30) Priorité: 05.02.1991 FR 9101282
(43) Date de publication de la demande: 12.08.1992
(73) Titulaire: AUTOMOBILES PEUGEOT, F-75116 Paris (FR); AUTOMOBILES CITROEN, F-92200 Neuilly sur Seine (FR)
(72) Inventeur: Desplanches, Philippe, F-78800 Houilles (FR); Dumoulin, Guy, F-59160 Lomme (FR)
(74) Mandataire: Habasque, Etienne Joel Jean-François

(56) Documents cités:
- EP-A- 0 307 931
- EP-A- 0 344 036
- LASER FOCUS. vol. 21, no. 3, 31 Mars 1985, TULSA US pages 100 - 102; W.V. SUBBARAO: 'Simple through-air IR transmitter and receiver'
- PATENT ABSTRACTS OF JAPAN vol. 10, no. 113 (E-339)(2170) 26 Avril 1986 & JP-A-60 248 045 (MITSUBISHI)

## Description

La présente invention concerne un dispositif de gestion de l'accès de stations de traitement d'informations à un réseau de transmission d'informations par voie optique entre ces stations.

Les systèmes de transmission d'informations par voie optique, notamment dans le domaine infrarouge, utilisent couramment des principes de transmission en trames codées par impulsions.

Les stations reliées au réseau, comprennent chacune des moyens de gestion du protocole de communication d'informations entre ces stations, pour contrôler l'accès de chaque station au réseau, engendrer des trames de bits de messages d'information et valider l'émission de celles-ci.

Dans le cas d'une liaison station à station, un protocole simple du type HDLC ( High-level Data Link Control) permet de réaliser facilement une interconnexion.

Cependant, si plusieurs stations émettrices peuvent fonctionner simultanément, il se pose un certain nombre de problèmes au niveau de la résolution des conflits d'accès au réseau, conflits pouvant entraîner ce que l'on appelle des collisions.

Une solution simple permettant de résoudre ce problème consiste à vérifier que le réseau est disponible en surveillant l'état de celui-ci.

En cas de risque de collision, les trames peuvent être réémises suivant une stratégie définie par exemple de façon statistique.

Par ailleurs, les contraintes physiques liées à la transmission par voie optique posent des problèmes supplémentaires dus à l'absence de possibilité de vérifier la réalité du signal émis ou à la constatation partielle de celle-ci à la suite de réflexions parasites ou imprévisibles.

On connaît du document EP-A-0 344 036, la substitution lors de l'émission, à chaque front montant ou descendant du signal à émettre sur le milieu, une alternance d'un front montant et d'un front descendant, tandis qu'à la réception, on substitue à chaque alternance d'un front montant et d'un front descendant, du signal à recevoir sur le milieu, un front montant ou descendant alternativement.

Le document EP-A-0 037 931 décrit quant à lui un module d'interface pour la connexion de terminaux comprenant différents tampons d'émission et de réception, une porte OU, différents moyens de détection et de commande et des moyens permettant de délivrer un signal de présence de collisions aux terminaux en réponse à la détection de l'apparition simultanée de paquets émis ou reçus.

Aucun de ces documents ne décrit l'analyse de trame pour valider l'émission d'une trame émise par la station ou détecter les collisions et résoudre les problèmes de conflit qui en résultent.

Le but de l'invention est donc de résoudre ces problèmes en proposant un dispositif de gestion de l'accès de stations de traitement d'informations à un réseau de transmission d'informations, qui soit parfaitement adapté à un codage de trames par impulsions, utilisé pour la transmission optique d'informations, qui soit très efficace et sans destruction d'informations et de plus qui permette de résoudre les problèmes liés au contrôle de la transmission des trames.

A cet effet, l'invention a pour objet un dispositif de gestion de l'accès de stations de traitement d'informations à un réseau de transmission d'informations par voie optique entre ces stations, dans lequel les stations comprennent chacune des moyens de gestion du protocole de communication d'informations entre les stations, pour contrôler l'accès de la station considérée au réseau, engendrer des trames de bits de messages d'information et valider l'émission de celles-ci, caractérisé en ce que la sortie d'émission de trame des moyens de gestion de protocole de chaque station est reliée à l'entrée de moyens de génération d'un signal à impulsions d'émission, dans lequel chaque impulsion correspond à une transition de la trame émise, dont la sortie est reliée à des moyens d'émission en direction d'au moins une autre station du réseau, de ce signal à impulsions d'émission, et à l'entrée d'une porte OU recevant sur une autre entrée, à partir de moyens de réception, un signal à impulsions de réception, en provenance d'une autre station du réseau, la sortie de la porte OU étant reliée à l'entrée de moyens de recomposition d'une trame composite à partir des impulsions d'un signal de sortie composite de cette porte OU, la sortie de ces moyens de recomposition étant reliée à l'entrée de contrôle et de validation des moyens de gestion de protocole de la station considérée, pour valider l'émission d'une trame et/ou contrôler l'accès de la station considérée au réseau.

Avantageusement, les moyens de gestion de protocole de chaque station comportent des moyens de surveillance de la trame composite pour autoriser l'accès de la station considérée au réseau en cas d'absence de transition dans celle-ci pendant un temps déterminé.

Avantageusement également les moyens de gestion de protocole de chaque station comprennent des moyens de comparaison bit à bit des trames émise et composite pour, en cas de correspondance des trames, valider l'émission par la station considérée et, en cas de différence, donner une priorité d'accès au réseau, à la station engendrant une transition supplémentaire dans la trame composite, en arrêtant l'émission d'une trame par la station considérée et en mettant celle-ci en état de réception.

L'invention sera mieux comprise à l'aide de la description qui va suivre, donnée uniquement à titre d'exemple et faite en se référant aux dessins annexés, sur lesquels :
- la Fig.1 représente un schéma synoptique d'un premier mode de réalisation d'un dispositif de gestion selon l'invention;
- la Fig.2 représente un schéma synoptique d'un premier mode de réalisation d'un module d'émission entrant dans la constitution d'un dispositif de gestion selon l'invention;
- la Fig.3 illustre le fonctionnement du module d'émission représenté sur la Fig.2;
- la Fig.4 représente un schéma synoptique d'un premier mode de réalisation d'un module de réception entrant dans la constitution d'un dispositif de gestion selon l'invention;
- la Fig.5 illustre le fonctionnement d'un module de réception entrant dans la constitution d'un dispositif de gestion selon l'invention;
- les Fig.6A à 6D illustrent différents fonctionnements possibles des modules d'émission et de réception décrits en regard des Fig.2, 3, 4 et 5 respectivement;
- la Fig.7 représente un schéma synoptique d'un second mode de réalisation d'un dispositif de gestion selon l'invention;
- la Fig.8 illustre le fonctionnement du dispositif de gestion représenté sur la Fig.7;
- la Fig.9 représente un schéma synoptique d'un second mode de réalisation d'un module d'émission entrant dans la constitution du dispositif de gestion représenté sur la Fig.7;
- la Fig.10 représente un schéma synoptique d'un second mode de réalisation d'un module de réception entrant dans la constitution d'un dispositif de gestion selon l'invention;
- la Fig.11 illustre le fonctionnement du module de réception représenté sur la Fig.10;
- les Fig.12, 13, 14 et 15 représentent des schémas illustrant différentes applications d'un dispositif de gestion selon l'invention; et
- la Fig.16 représente un schéma synoptique d'un troisième mode de réalisation d'un dispositif de gestion selon l'invention.

Le dispositif de gestion selon l'invention peut être utilisé pour gérer l'accès de stations de traitement d'informations à un réseau de transmission d'informations par voie optique entre ces stations, utilisant un principe de transmission en trames codées par impulsions.

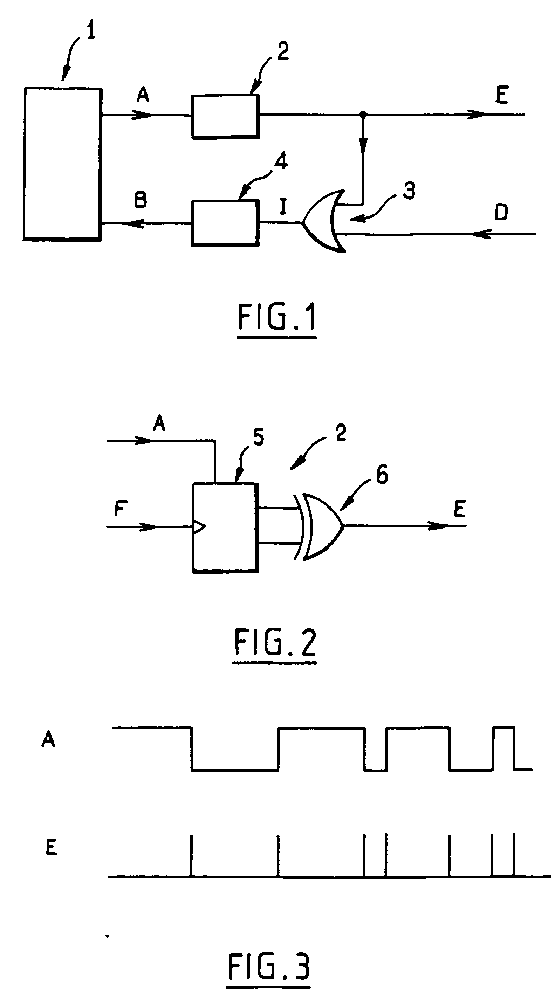

Chaque station comprend des moyens de gestion du protocole de communication d'informations entre les stations. Ces moyens sont désignés par la référence générale 1 sur la Fig.1, et peuvent être constitués par tout microprocesseur ou circuit intégré spécifique d'application, appropriés.

Ces moyens de gestion du protocole de communication sont adaptés pour contrôler l'accès de la station considérée au réseau, engendrer des trames de bits de messages d'information et valider l'émission de celles-ci.

Selon l'invention, la sortie A d'émission des trames des moyens de gestion de protocole 1 de chaque station, est reliée à l'entrée de moyens 2 de génération d'un signal à impulsions d'émission, désigné par E sur cette figure, dans lequel, comme cela sera décrit plus en détail par la suite, chaque impulsion correspond à une transition de la trame émise A.

Ce signal à impulsions E est ensuite appliqué à des moyens d'émission de ce signal vers au moins une autre station du réseau.

La sortie de ces moyens de génération d'un signal à impulsions d'émission 2, est également reliée à une entrée d'une porte OU 3, recevant sur une autre entrée, à partir de moyens de réception de signaux de la station considérée, un signal à impulsions de réception D, en provenance d'une autre station raccordée au réseau.

Comme cela sera décrit plus en détail par la suite, les moyens d'émission et de réception peuvent être constitués par tous moyens connus.

La sortie I de la porte OU 3 est reliée à l'entrée de moyens 4 de recomposition d'une trame composite à partir des impulsions du signal de sortie composite I de cette porte OU.

La sortie B de ces moyens de recomposition est reliée à l'entrée de contrôle et de validation des moyens de gestion de protocole 1 de la station considérée, pour valider l'émission d'une trame et/ou contrôler l'accès de la station considérée au réseau.

Comme on peut le voir sur la Fig.2, les moyens 2 de génération d'un signal à impulsions d'émission, également appelés module d'émission, peuvent par exemple comporter un registre à décalage 5 dont une entrée reçoit la sortie A d'émission de trame des moyens de gestion de protocole 1 de la station et dont une autre entrée reçoit un signal d'horloge F pour le cadencement de ce registre à décalage.

La sortie de ce registre à décalage 5 est reliée à l'entrée d'une porte OU-exclusif 6 dont la sortie constitue le signal à impulsions d'émission E décrit précédemment.

On constate en effet sur la Fig.3 que la trame de bits A sortant des moyens de gestion de protocole 1 de la station considérée, comprend des bits de codage de l'information émise, tandis que le signal à impulsions d'émission E en sortie de la porte OU-exclusif 6 et donc en sortie des moyens de génération du signal à impulsions d'émission 2, décrits en regard de la Fig.1, comprend une impulsion à chaque transition dans la trame A pour former un train d'impulsions E destiné à être émis en direction d'au moins une autre station du réseau.

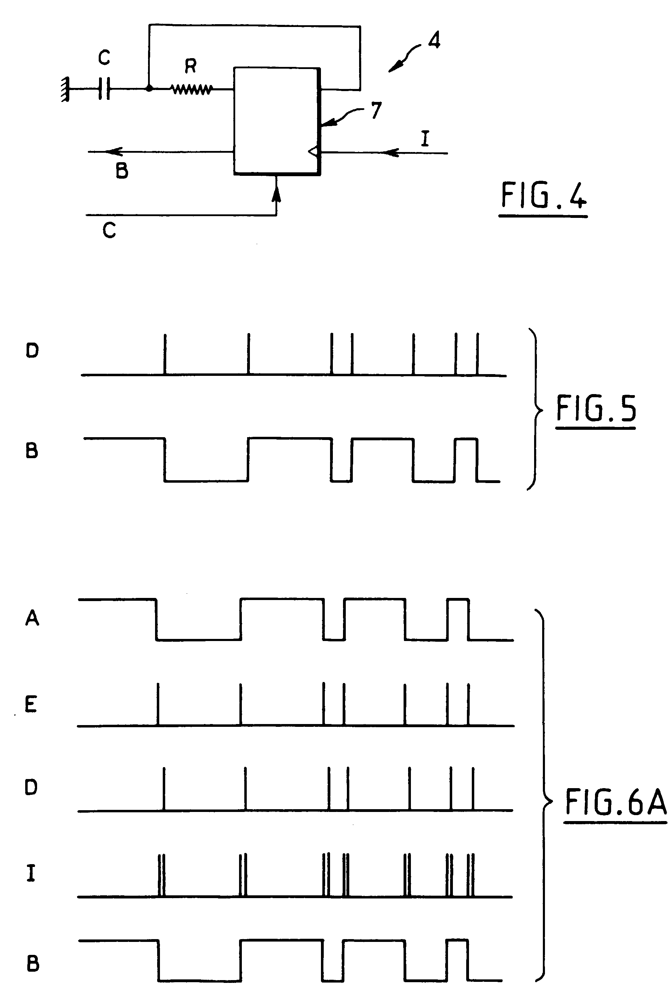

Sur la Fig.4, on a représenté un mode de réalisation des moyens de recomposition d'une trame composite 4. Ces moyens sont en fait basés, par exemple, sur une bascule 7 assurant la transformation du train d'impulsions composite I, en sortie de la porte OU 3, en une trame composite B, par bouclage de sa sortie sur son entrée.

Le train d'impulsions composite I est en effet appliqué sur l'entrée d'horloge de cette bascule, tandis qu'un filtre RC, prévu dans le bouclage de la sortie de cette bascule sur son entrée, permet, comme cela sera décrit plus en détail par la suite, d'accepter des décalages entre les impulsions du train E provenant de la sortie des moyens de génération d'un signal à impulsions d'émission 2, et du signal à impulsions de réception D, provenant d'une autre station du réseau à travers les moyens de réception de la station.

Un signal de réinitialisation C est également appliqué à cette bascule par les moyens de gestion de protocole 1, pour la réinitialisation de celle-ci en cas d'arrêt intempestif de la transmission.

Le fonctionnement général de ce module de réception est décrit en regard de la Fig. 5, dans laquelle on constate que le signal à impulsions de réception D émanant d'une autre station du réseau, par exemple par réflexion du signal émis par la station considérée, permet par recomposition, d'obtenir un signal de trame composite B, à partir des impulsions du signal de sortie composite de la porte OU 3.

En effet, et comme on peut le voir sur la Fig.6A, la trame de bits de message A en sortie des moyens de gestion de protocole 1, est dans un premier temps convertie en un train d'impulsions E qui est émis vers au moins une autre station du réseau.

Ce train d'impulsions E est également appliqué à l'entrée de la porte OU 3 qui reçoit sur une autre entrée, le train d'impulsions de réception D, en provenance d'une autre station du réseau. Ce train d'impulslons D peut être constitué par le train d'impulsions E réfléchi involontairement pour des raisons tenant aux propriétés physiques des signaux optiques ou volontairement par la station réceptrice du message, qui à titre d'accusé de réception, retourne le train d'impulsions E en direction de la station émettrice.

Un décalage peut exister entre les impulsions des deux signaux du fait des caractéristiques de transmission du réseau et de la station réceptrice de ce message (signal composite I).

Cependant, le filtre RC connecté entre la sortie et l'entrée de la bascule 7 permet de régler un décalage autorisé entre les impulsions des signaux émis et reçu.

Le dispositif peut alors intégrer les caractéristiques de transmission du réseau pour accepter un certain décalage entre les impulsions des trains émis et reçu.

Ceci permet à la bascule 7 des moyens 4, de recomposer une trame composite B à partir des impulsions du signal de sortie composite I de la porte OU 3 et d'appliquer cette trame composite B à l'entrée de contrôle et de validation des moyens de gestion de protocole 1 de la station considérée pour, comme cela sera décrit plus en détail par la suite, valider l'émission d'une trame et/ou contrôler l'accès de la station considérée au réseau.

De plus, ceci permet à ces moyens de gestion de protocole de connaître en permanence l'état logique du support du réseau si celui-ci en contient un.

Dans le cas d'une émission par la station considérée, le dispositif permet donc de valider l'émission de la trame émise et il permet également de s'affranchir des problèmes dûs par exemple aux réflexions.

En effet, par comparaison de la trame émise et de la trame composite, il est possible de valider l'émission de la trame émise en cas de concordance entre ces deux trames.

On notera à cet égard que dans le cas illustré sur la Fig.6A, le retour d'informations est total, c'est à dire que toutes les impulsions émises sont réfléchies vers la station émettrice.

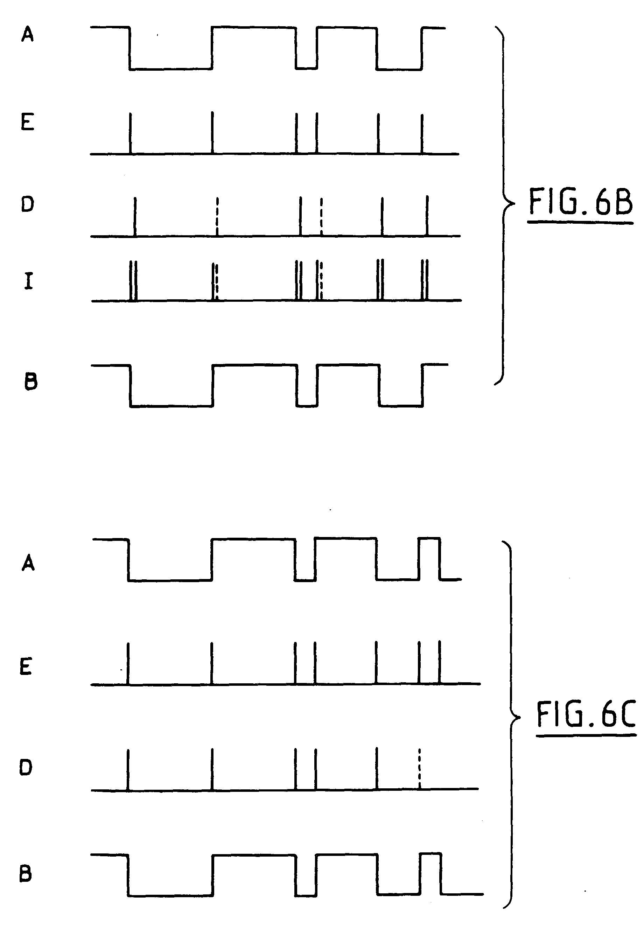

Cependant, ce retour peut également être partiel (Fig.6B), ceci n'affectant pas le fonctionnement du dispositif dans la mesure où la porte OU permet de superposer les trains d'impulsions émis et reçu en retour.

On notera que le décalage mentionnné précédemment, entre les impulsions des trains émis et reçu peut typiquement être équivalent à 1/4 de l'intervalle minimum entre les transitions de la trame et que ce décalage est également admis dans le cas de la réception de trames provenant de deux stations distinctes du réseau.

Les moyens de gestion de protocole de chaque station comprennent donc des moyens de comparaison bit à bit des trames émise et composite pour, en cas de correspondance entre ces trames, valider l'émission d'une trame émise par la station considérée.

Ces moyens de gestion de protocole 1 comportent également des moyens de surveillance de la trame composite pour autoriser l'accès de la station considérée au réseau en cas d'absence de transition dans celle-ci pendant un temps prédéterminé.

En effet, la station considérée qui souhaite accéder au réseau, doit tout d'abord s'assurer que celui-ci est libre pour ne pas créer de confusion.

On notera à titre d'exemple que le temps prédéterminé d'attente peut être de douze créneaux au minimum dans le cas du protocole VAN.

Cependant, il peut arriver également que des stations souhaitent accéder au réseau simultanément, ce qui crée une collision.

Dans ce cas, à partir de l'émission du début de message qui est également appelé préambule ou symbole de début, les deux stations souhaitant accéder au réseau simultanément, se synchronisent sur l'entête de la trame, de façon à émettre en synchronisme le premier bit de celle-ci.

Chaque station vérifie en permanence, c'est à dire pour chaque bit de la trame émise, que ce qu'elle reçoit correspond à ce qu'elle émet, en réalisant par exemple une comparaison bit à bit des trames émise E et composite I.

Ainsi qu'on l'a indiqué précédemment, en cas de correspondance entre ces trames, les moyens de gestion de protocole valident l'émission d'une trame émise par la station considérée.

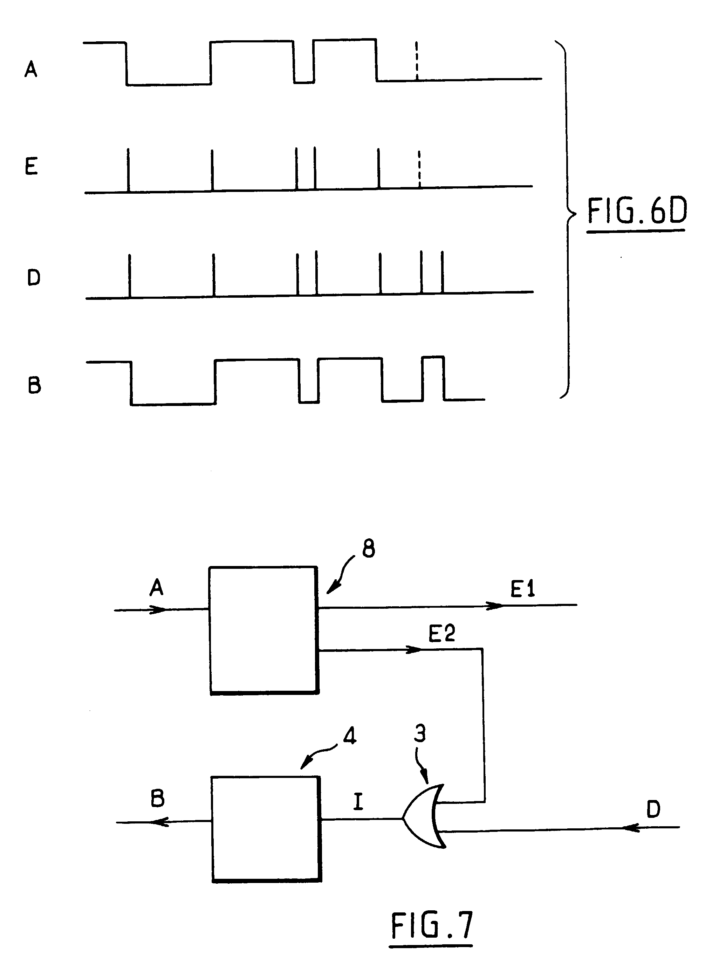

Cependant, en cas de différence (Fig.6D) entre les trames émise et composite, ces moyens de gestion de protocole entament une procédure de résolution de conflit en donnant une priorité d'accès au réseau, à la station engendrant une transition supplémentaire dans la trame composite et ceci en arrêtant l'émission d'une trame par la station considérée et en mettant celle-ci en état de réception.

A titre d'exemple, dans le cas décrit, cette résolution de conflit est effectuée selon le principe suivant.

La première station qui engendre une transition supplémentaire continue d'émettre (Fig.6D), tandis que l'autre station ou les autres s'arrêtent et continuent à recevoir ce qui est émis par la première station (Fig.6C). Ceci se traduit au niveau de la trame de la manière suivante: le 1 logique est dominant et le 0 logique récessif, si le niveau précédent est représenté par un 0 logique.

Inversement, le 0 logique est dominant et le 1 logique récessif si le niveau précédent est représenté par un 1 logique.

Cette procédure conduit à établir une priorité entre les différentes stations souhaitant émettre.

En effet, la station la plus prioritaire est celle qui continue à émettre et la station la moins prioritaire est celle qui s'arrête et qui doit attendre pour réémettre sa trame.

On trouvera dans les tableaux ci-dessous des exemples illustrant cette procédure de résolution de conflit pour une trame VAN codée manchester, une trame HDLC codée NRZ et une trame HDLC codée par des transitions à chaque zéro.

### Exemple de priorité sur une trame VAN codée manchester.

Priorité maximum : 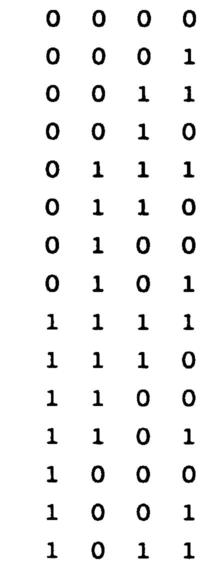 Priorité minimum :

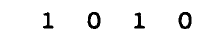

### Exemple de priorité avec une trame HDLC codée NRZ.

Priorité maximum : 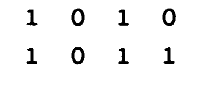 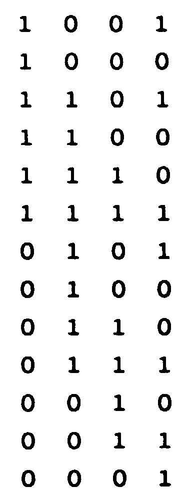 Priorité minimum :

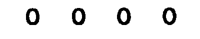

### Exemple de priorité avec une trame HDLC codée par des transitions à chaque zéro.

Priorité maximum : 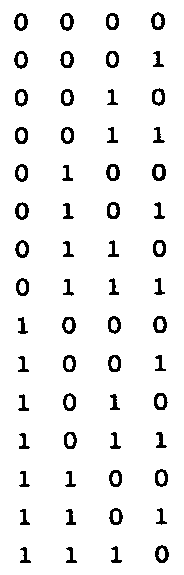 Priorité minimum :

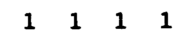

Ainsi qu'on l'a indiqué précédemment en regard de la Fig.4, il peut être prévu des moyens de gestion du décalage entre signaux à impulsions d'émission et de réception qui, dans ce mode de réalisation sont constitués par un filtre RC interposé dans le bouclage de la sortie de la bascule 7 sur l'entrée de celle-ci.

Suivant un autre mode de réalisation représenté sur la Fig.7, la gestion du décalage entre les impulsions des trains émis et reçu, est assurée par la génération d'un train d'impulsions E2 décalé dans le temps par rapport à un train d'impulsions émis E1.

Les moyens de génération du signal à impulsions d'émission désignés sur cette figure par la référence 8, engendrent alors deux trains d'impulsions E1 et E2 décalés dans le temps, l'un, E1, étant destiné à être émis vers au moins l'une des autres stations reliées au réseau, tandis que le train E2, retardé par rapport au train E1, est appliqué à l'entrée correspondante de la porte OU 3 décrite précédemment.

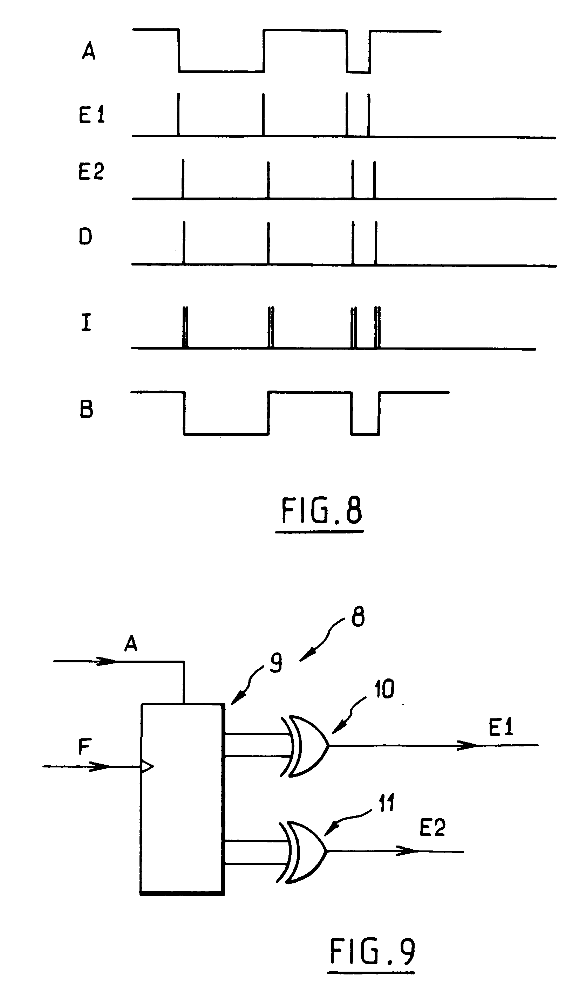

Le fonctionnement de ce mode de réalisatlon des moyens de gestion représentés sur la Fig.8, est identique au fonctionnement des moyens déjà décrits.

Ces moyens 8 peuvent en fait être constitués par un registre à décalage 9 (Fig.9) recevant sur une entrée, la trame A et sur une autre entrée, le signal d'horloge F, tandis que ses sorties sont reliées à des portes OU-exclusif 10 et 11 dont les sorties délivrent les trains E1 et E2 respectivement.

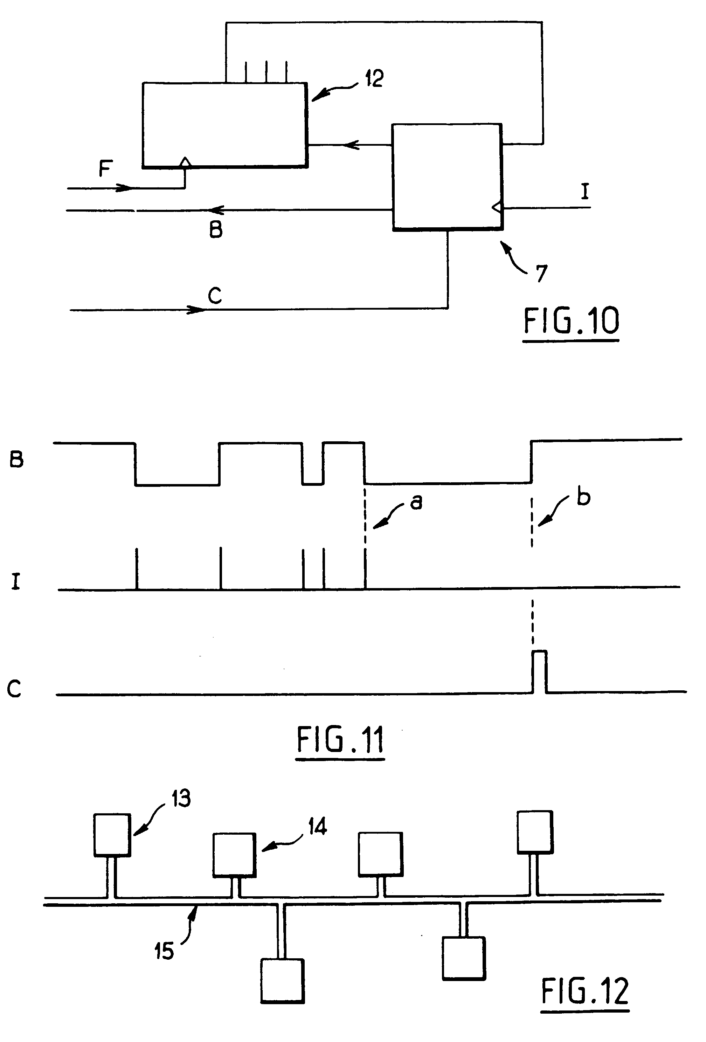

Sur la Fig.10, on a représenté un autre mode de réalisation possible d'un module de réception.

Celui-ci comporte toujours la bascule 7 recevant sur des entrées le signal à impulsions composite I en sortie de la porte OU 3, le signal C de réinitialisation, tandis que sa sortie est bouclée sur son entrée par l'intermédiaire d'un registre à décalage 12.

Ce registre permet d'assurer la gestion du décalage entre les impulsions des trains émis et reçu, tandis que le signal d'horloge F permet de régler la valeur de décalage autorisé.

Le signal C permet de remettre la bascule dans un état d'attente de trame (b) en cas d'arrêt intempestif de la transmission (a), comme cela est visible sur la Fig.11.

On constate donc que la porte OU 3 décrit en regard de la Fig.1, assure le retour du signal émis E vers les moyens de gestion de protocole 1 de la station considérée, à travers le module de réception, pour permettre la validation de la trame émise tout en assurant le passage du train d'impulsions reçu, vers ce module de réception, ce qui permet ainsi d'assurer la gestion des collisions.

On notera en regard des figures 7 à 9 que le décalage entre les impulsions des signaux E1 et E2 est à peu près égal au retard des impulsions réfléchies par rapport à celles qui sont émises. Ceci permet au module de réception de se synchroniser sur la réception de ces signaux, et de ce fait en cas de collision gagnée par l'autre station d'émission, on diminue nettement les risques de désynchronisation des stations.

Le dispositif qui vient d'être décrit peut être utilisé pour réaliser des interfaces de raccordement de stations sur un bus à fibres optiques comme on peut le voir sur la Fig.12.

Ces différentes stations par exemple 13, 14 peuvent en effet être reliées par un bus 15 à fibres optiques.

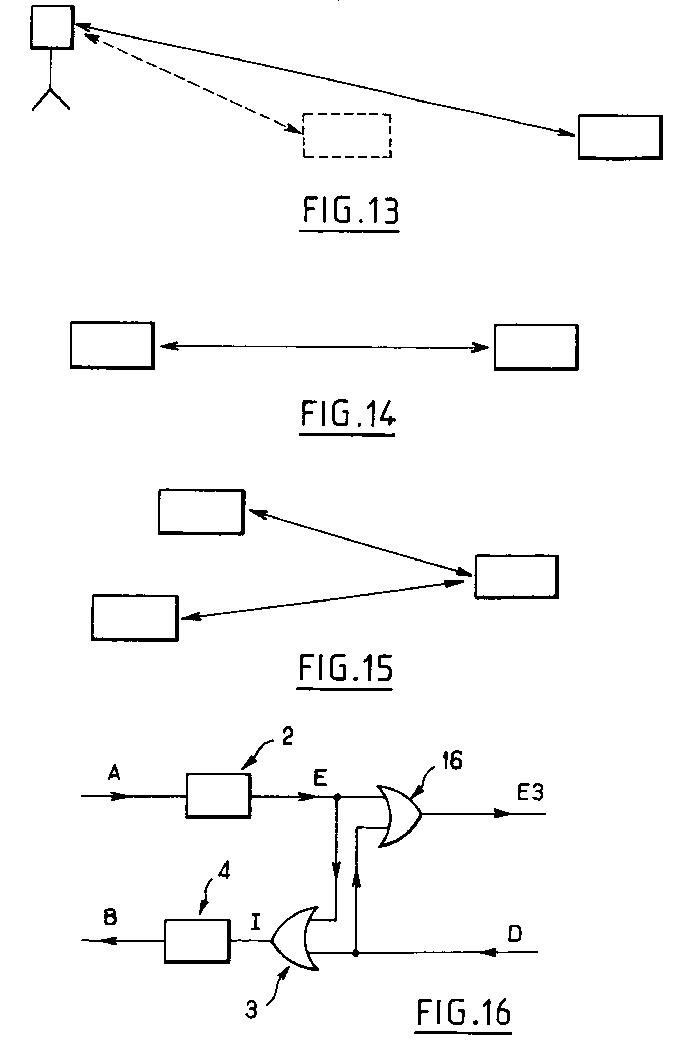

Cependant, le dispositif selon l'invention peut également assurer la gestion de transmissions point à point dans l'air entre deux stations fixes ou mobiles, comme cela est représenté sur les Fig.13 et 14 ou de transmissions multipoints dans l'air entre différentes stations fixes ou mobiles, comme on peut le voir sur la Fig.15.

Dans cette dernière application, il peut arriver que deux stations émettrices ne se voient pas par exemple dans le cas où elles sont montées sur des véhicules automobiles qui se suivent, et qui dialoguent avec un feu de signalisation, de sorte que les dispositifs assurant la gestion de la transmission des informations entre véhicules, ne peuvent se voir.

Dans ce cas, il est nécessaire d'ajouter au dispositif de gestion de chaque station des moyens permettant de réémettre les signaux reçus, comme cela est illustré sur la Fig. 16.

En effet, le train d'impulsions E, au lieu d'être émis directement, est entré dans une porte OU 16 recevant sur une autre entrée, le train d'impulsions D reçu par la station. Cette porte combine donc les informations reçues par la station à celles émises par celle-ci, pour former un signal complexe E3 qui est émis en direction d'au moins une autre station du réseau.

Ceci permet aux différents dispositifs ne se voyant pas en direct, d'obtenir l'état logique du support de transmission, par analyse de ce signal complexe.

Le dispositif selon l'invention trouve donc des applications en particulier pour la transmission d'informations entre véhicules automobiles et entre véhicules et infrastructure routière.

## Revendications

1. Dispositif de gestion de l'accès de stations de traitement d'informations à un réseau de transmission d'informations par voie optique entre ces stations, dans lequel les stations comprennent chacune des moyens (1) de gestion du protocole de communication d'informations entre les stations, pour contrôler l'accès de la station considérée au réseau, engendrer des trames de bits de messages d'information et valider l'émission de celles-ci, caractérisé en ce que la sortie (A) d'émission de trame des moyens (1) de gestion de protocole de chaque station est reliée à l'entrée de moyens (2) de génération d'un signal (E) à impulsions d'émission, dans lequel chaque impulsion correspond à une transition de la trame émise, dont la sortie est reliée à des moyens d'émission en direction d'au moins une autre station du réseau, de ce signal à impulsions d'émission, et à l'entrée d'une porte OU (3) recevant sur une autre entrée, à partir de moyens de réception, un signal (D) à impulsions de réception, en provenance d'une autre station du réseau, la sortie de la porte OU (3) étant reliée à l'entrée de moyens (4) de recomposition d'une trame composite (B) à partir des impulsions d'un signal de sortie composite (I) de cette porte OU (3), la sortie de ces moyens (4) de recomposition étant reliée à l'entrée de contrôle et de validation des moyens (1) de gestion de protocole de la station considérée, pour valider l'émission d'une trame et/ou contrôler l'accès de la station considérée au réseau.

2. Dispositif selon la revendication 1, caractérisé en ce que les moyens (1) de gestion de protocole de chaque station comportent des moyens de surveillance de la trame composite (B) pour autoriser l'accès de la station considérée au réseau en cas d'absence de transition dans celle-ci pendant un temps déterminé.

3. Dispositif selon la revendication 1 ou 2, caractérisé en ce que les moyens (1) de gestion de protocole de chaque station comprennent des moyens de comparaison bit à bit des trames émise (A) et composite (B) pour, en cas de correspondance des trames, valider l'émission par la station considérée et, en cas de différence, donner une priorité d'accès au réseau, à la station engendrant une transition supplémentaire dans la trame composite (B), en arrêtant l'émission d'une trame par la station considérée et en mettant celle-ci en état de réception.

4. Dispositif selon l'une quelconque des revendications précédentes, caractérisé en ce que les moyens de génération du signal à impulsions d'émission comprennent un registre à décalage (5).

5. Dispositif selon l'une quelconque des revendications précédentes, caractérisé en ce que les moyens de recomposition de la trame composite comprennent une bascule (7).

6. Dispositif selon l'une quelconque des revendications précédentes, caractérisé en ce qu'il comporte des moyens (RC; 9; 12) de gestion du décalage entre signaux à impulsions d'émission et de réception.

7. Dispositif selon les revendications 4 et 6, caractérisé en ce que les moyens de gestion du décalage comprennent des moyens (9) de décalage du signal à impulsions d'émission appliqué à l'entrée correspondante de la porte OU(3).

8. Dispositif selon la revendication 7, caractérisé en ce que le registre à décalage (9) des moyens de génération du signal à impulsions d'émission, comprend deux parties, dont l'une engendre le signal à impulsions d'émission (E1) et l'autre un signal analogue (E2) décalé dans le temps et appliqué à l'entrée correspondante de la porte OU(3).

9. Dispositif selon les revendications 5 et 6, caractérisé en ce que les moyens de gestion du décalage entre signaux à impulsions d'émission et de réception, comprennent un filtre RC connecté entre la sortie et l'entrée de la bascule (7) des moyens de recomposition.

10. Dispositif selon les revendications 5 et 6, caractérisé en ce que les moyens de gestion du décalage entre signaux à impulsions d'émission et de réception comprennent un registre à décalage (12) connecté entre la sortie et l'entrée de la bascule (7) des moyens de recomposition.

11. Dispositif selon la revendication 5, caractérisé en ce que la bascule (7) des moyens de recomposition comporte une entrée de réinitialisation (c) pour la remettre en attente d'un signal en cas d'arrêt intempestif d'une transmission.

12. Dispositif selon l'une quelconque des revendications précédentes, caractérisé en ce que le réseau de transmission d'informations comprend un bus à fibre optique (15).

13. Dispositif selon l'une quelconque des revendications 1 à 11, caractérisé en ce que le réseau de transmission d'informations est formé par des trajets optiques établis dans l'air entre les moyens d'émission et de réception des stations.

14. Dispositif selon la revendication 13, caractérisé en ce qu'il comporte des moyens (16) de renvoi du signal à impulsions reçu (D) par la station considérée en direction d'au moins une autre station du réseau.

## Patentansprüche

1. Vorrichtung zur Verwaltung des Zuganges von Informationsverarbeitungsstationen zu einem Netz zur Informationsübertragung auf optischem Wege zwischen diesen Stationen, wobei die Stationen jeweils Mittel (1) zur Verwaltung des Protokolls für die Informationskommunikation zwischen den Stationen für eine Kontrolle des Zugangs der betrachteten Station zum Netz, die Erzeugung von Bitmustern von Informationsnachrichten und die Validierung der Absendung derselben aufweisen, dadurch gekennzeichnet, daß der Musterabsendeausgang (A) der Mittel zur Protokollverwaltung einer jeden Station mit dem Eingang von Mitteln (2) zur Erzeugung eines Absendeimpulssignals (E), in dem jeder solcher Impuls einem Übergang des ausgesandten Musters entspricht, deren Ausgang mit Absendemitteln zur Absendung dieses Absendeimpulssignals in Richtung wenigstens einer weiteren Station des Netzes und mit dem Eingang eines ODER-Glieds (3) verbunden ist, welches an einem weiteren Eingang auf der Grundlage von Empfangsmitteln ein Empfangsimpulssignal (D), herkommend von einer weiteren Station des Netzes, erhält, wobei der Ausgang des ODER-Glieds (3) mit dem Eingang von Mitteln (4) zur Wiederzusammensetzung eines zusammengesetzten Musters (B) auf der Grundlage der Impulse eines zusammengesetzten Ausgangssignals (I) des ODER-Glieds (3) verbunden ist, wobei der Ausgang dieser Wiederzusammensetzungsmittei (4) mit dem Kontroll- und Validierungseingang der Protokollverwaltungsmittel (1) der betrachteten Station verbunden ist, um die Absendung eines Musters zu validieren und/oder den Zugang der betrachteten Station zum Netz zu kontrollieren.

2. Vorrichtung nach Anspruch 1, dadurch gekennzeichnet, daß die Protokollverwaltungsmittel (1) jeder Station Mittel zur Überwachung des zusammengesetzten Musters (B) zur Autorisierung des Zugangs der betrachteten Station zum Netz im Falle des Fehlens von Übergängen in diesem während einer bestimmten Zeit aufweisen.

3. Vorrichtung nach Anspruch 1 oder 2, dadurch gekennzeichnet, daß die Protokollverwaltungsmittel (1) jeder Station Mittel zum bitweisen Vergleichen der abgesandten Muster (A) und der zusammengesetzten Muster (B) aufweisen, um im Falle einer Entsprechung der Muster das Absenden durch die betrachtete Station zu validieren und, im Falle eines Unterschieds, eine Netzzugangspriorität der Station zu geben, welche einen zusätzlichen Übergang in dem zusammengesetzten Muster (B) erzeugt, wobei gleichzeitig die Absendung eines Musters durch die betrachtete Station angehalten und diese in Empfangszustand gesetzt wird.

4. Vorrichtung nach irgendeinem der vorstehenden Ansprüche, dadurch gekennzeichnet, daß die Mittel zur Erzeugung des Absendeimpulssignals ein Schieberegister (5) aufweisen.

5. Vorrichtung nach nach irgendeinem der vorstehenden Ansprüche, dadurch gekennzeichnet, daß die Mittel zur Wiederzusammensetzung des zusammengesetzten Musters ein Kippglied (7) aufweisen.

6. Vorrichtung nach irgendeinem der vorstehenden Ansprüche, dadurch gekennzeichnet, daß sie Mittel (RC; 9; 12) zur Verwaltung der Verschiebung zwischen Absendeimpulesignalen und Empfangsimpulssignalen aufweist.

7. Vorrichtung nach den Ansprüchen 4 und 6, dadurch gekennzeichnet, daß die Mittel zur Verwaltung der Verschiebung Schiebemittel (9) zur Verschiebung des Absendeimpulssignals, welches auf den entsprechenden Eingang des ODER-Glieds (3) gegeben wird, aufweisen.

8. Vorrichtung nach Anspruch 7, dadurch gekennzeichnet, daß das Schieberegister (9) der Mittel zur Erzeugung des Absendeimpulssignals zwei Teile aufweist, von denen einer das Absendeimpulssignal (E1) und der andere ein entsprechendes Signal (E2), welches zeitlich versetzt und auf den entsprechenden Eingang des ODER-Glieds (3) gegeben wird, erzeugt.

9. Vorrichtung nach den Ansprüchen 5 und 6, dadurch gekennzeichnet, daß die Mittel zur Verwaltung der Verschiebung zwischen Absendeimpulssignalen und Empfangsimpulssignalen ein RC-Filter aufweisen, welches zwischen dem Ausgang und dem Eingang des Kippglieds (7) der Wiederzusammensetzungsmittel angeschlossen ist.

10. Vorrichtung nach Anspruch 5 oder 6, dadurch gekennzeichnet, daß die Mittel zur Verwaltung der Verschiebung zwischen Absendeimpulssignalen und Empfangsimpulasignalen ein Schieberegister (12) aufweisen, welches zwischen dem Ausgang und Eingang des Kippglieds (7) der Wiederzusammensetzungsmittel angeschlossen ist.

11. Vorrichtung nach Anspruch 5, dadurch gekennzeichnet, daß das Kippglied (7) der Wiederzusammensetzungsmittel einen Reinitialisierungseingang (t) aufweist, um es wieder wartend auf ein Signal im Falle einer ungewollten Unterbrechung einer Übertragung zu setzen.

12. Vorrichtung nach irgendeinem der vorstehenden Ansprüche, dadurch gekennzeichnet, daß das Informationsübertragungsnetz einen faseroptischen Bus (15) aufweist.

13. Vorrichtung nach irgendeinem der Ansprüche 1 bis 11, dadurch gekennzeichnet, daß das Informationsübertragungsnetz durch optische Bahnen gebildet ist, die in der Luft zwischen den Aussende- und Empfangnmitteln der Stationen errichtet sind.

14. Vorrichtung nach Anspruch 13, dadurch gekennzeichnet, daß sie Mittel (16) zum Rücksenden des von der betrachteten Station empfangenen Impulssignals (D) in Richtung wenigstens einer weiteren Station des Netzes aufweist.

## Claims

1. Device for management of the access of data processing stations to a data transmission network by an optical line between these stations, in which each of the stations comprises means (1) for management of the protocol for data communication between the stations, for controlling the access of the station concerned to the network, for generating bit patterns for data messages and validating the emission thereof, characterised in that the pattern emission output (A) of the means (1) for protocol management of each station is connected to the input of means (2) for generating an emission pulse signal (E), in which each pulse corresponds to a transition of the emitted pattern, the output whereof is connected to the means for emission of this emission pulse signal in the direction of at least one other station in the network, and to the input of an OR gate (3) receiving over another input, from receiving means, a reception pulse signal (D) originating from another station in the network, the output of the OR gate (3) being connected to the input of means (4) for recomposition of a composite pattern (B) from pulses of a composite output signal (1) of this OR gate (3), the output of these recomposition means (4) being connected to the control and validation input of the means (1) for protocol management of the station concerned in order to validate the emission of a pattern and/or to control the access of the station concerned to the network.

2. Device as claimed in Claim 1, characterised in that the means (1) for protocol management of each station include means for monitoring the composite pattern (B) in order to authorise access of the station concerned to the network in the absence of transition in the latter during a predetermined time period.

3. Device as claimed in Claim 1 or 2, characterised in that the means (1) for protocol management of each station comprise means for bit by bit comparison of the emitted patterns (A) and composite patterns (B) in order, in the event that these patterns correspond, to validate the emission by the station concerned and, in the event that they differ, to give priority access to the network to the station generating a supplementary transition in the composite pattern (B) by stopping the emission of a pattern by the station concerned and putting the latter into receiving mode.

4. Device as claimed in any one of the preceding claims, characterised in that the means for generating the emission pulse signal comprise a shift register (5).

5. Device as claimed in any one of the preceding claims, characterised in that the means for recomposition of the composite pattern comprise a flip-flop (7).

6. Device as claimed in any one of the preceding claims, characterised in that it includes means (RC; 9; 12) for managing the shift between emission pulse signals and reception pulse signals.

7. Device as claimed in Claims 4 and 6, characterised in that the means for managing the shift comprise means (9) for shifting the emission pulse signal applied to the corresponding input of the OR gate (3).

8. Device as claimed in Claim 7, characterised in that the shift register (9) of the means for generating the emission pulse signal comprises two parts, of which one generates the emission pulse signal (E1) and the other an analog signal (E2) shifted in time and applied to the corresponding input of the OR gate (3).

9. Device as claimed in Claims 5 and 6, characterised in that the means for managing the shift between emission pulse signals and reception pulse signals comprise a filter (RC) connected between the output and the input of the flip-flop (7) of the recomposition means.

10. Device as claimed in Claims 5 and 6, characterised in that the means for managing the shift between emission pulse signals and reception pulse signals comprise a shift register (12) connected between the output and the input of the flip-flop (7) of the recomposition means.

11. Device as claimed in Claim 5, characterised in that the flip-flop (7) of the recomposition means includes a reinitialisation input (c) to return it to stand-by to await a signal in the event of premature stoppage of a transmission.

12. Device as claimed in any one of the preceding claims, characterised in that the data transmission network comprises a fibre optic bus (15).

13. Device as claimed in any one of Claims 1 to 11, characterised in that the data transmission network is formed by optical paths established in the air between the emission means and reception means of the stations.

14. Device as claimed in Claim 13, characterised in that it includes means (16) for sending back the pulse signal received (D) by the station concerned in the direction of at least one other station of the network.
